# EUROPÄISCHE PATENTSCHRIFT

(11) **EP 0 998 102 B1**
(45) Veröffentlichungstag und Bekanntmachung des Hinweises auf die Patenterteilung: **05.01.2011**
(21) Anmeldenummer: 99121221.8
(22) Anmeldetag: 23.10.1999
(51) Int. Cl.: H04M 1/02

(54) **Kommunikationsgerät**
Communication device
Dispositif de communication

(30) Priorität: 29.10.1998 DE 19849888
(43) Veröffentlichungstag der Anmeldung: 03.05.2000
(73) Patentinhaber: ROBERT BOSCH GMBH, 70442 Stuttgart (DE)
(72) Erfinder: Ernst, Randolf, 31137 Hildesheim (DE); Herrmann, Matthias, 31141 Hildesheim (DE)

(56) Entgegenhaltungen:
- WO-A-98/17502
- DE-A- 4 317 385
- GB-A- 2 320 783
- US-A- 5 661 632
- US-A- 5 771 469
- PATENT ABSTRACTS OF JAPAN vol. 013, no. 581 (E-865), 21. Dezember 1989 (1989-12-21) & JP 01 243646 A (NEC CORP), 28. September 1989 (1989-09-28)

## Beschreibung

### Stand der Technik

Die Erfindung geht aus von einem Kommunikationsgerät nach der Gattung des unabhängigen Patentanspruchs. Aus der DE 43 17 385 A1 ist bereits ein Kommunikationsgerät mit einem Telefon und einem als Autoradio ausgebildeten Gehäuseteil bekannt. Das Telefon kann dabei betrieben werden, wenn es mit dem Autoradio verbunden ist und es kann betrieben werden, wenn es nicht mit dem Autoradio verbunden ist. Weiterhin wird die Darstellung von Informationen auf einem Display beschrieben.

Aus der US 5,771,469 ist ein tragbares Telefon für die Verwendung in einem Kraftfahrzeug bekannt. In Abhängigkeit davon, ob das tragbare Telefon in einer Halterung in einem Kraftfahrzeug eingesetzt ist, werden Zeichen, die in der Anzeige des tragbaren Telefons dargestellt sind, vergrößert dargestellt.

Aus der JP 01-243 646 ist ein Handgerät eines Telefons bekannt, bei dem über einen Sensor ein Schwerkraftvektor bestimmt wird. In Abhängigkeit von dem Schwerkraftvektor wird eine Anzeige von Ziffern in einer Anzeige des Telefons in geeigneter Weise jeweils um 90° gedreht.

Aus der US 5,661,632 ist ein Handcomputer bekannt, bei dem die Position von Bedienelementen in einer Anzeigefläche in Abhängigkeit von einer Ausrichtung des Hand-Computers jeweils verschoben werden können. Die Bedienelemente können dabei unterhalb einer Anzeigefläche oder neben einer Anzeigefläche angeordnet sein.

Aus der GB 2 320783 A ist ein tragbares elektrisches Gerät für die Benutzung durch einen Rechtshänder bzw. einen Linkshänder bekannt. Die Anzeige kann je nach Benutzung durch den Rechts- bzw. Linkshänder um 180° gedreht werden.

### Vorteile der Erfindung

Das Kommunikationsgerät mit den kennzeichnenden Merkmalen des unabhängigen Patentanspruchs hat demgegenüber den Vorteil, daß die Ablesbarkeit der Information auf dem Display für den Benutzer verbessert wird.

Vorteilhafte Verbesserungen und Weiterbildungen ergeben sich aus den Merkmalen der Abhängigen Patentansprüche.

Besonders einfach wird eine 90° Umschaltung der Ableseachsen des Displays vorgesehen. Alternative kann auch eine Darstellung in jeder beliebigen Winkellage vorgesehen werden. Die Umschaltung der Tastatur gewährleistet eine gute Bedienbarkeit der Tastatur in jedem Betriebszustand. Weiterhin wird das Einlegen in eine Ausnehmung des Gehäuseteils durch die symmetrische Ausgestaltung erleichtert. Besonders vorteilhaft wird das Telefon als GSM-Telefon oder als Mobilstation zur Kommunikation mit einer im Gehäuseteil angeordneten Basisstation ausgebildet.

### Zeichnungen

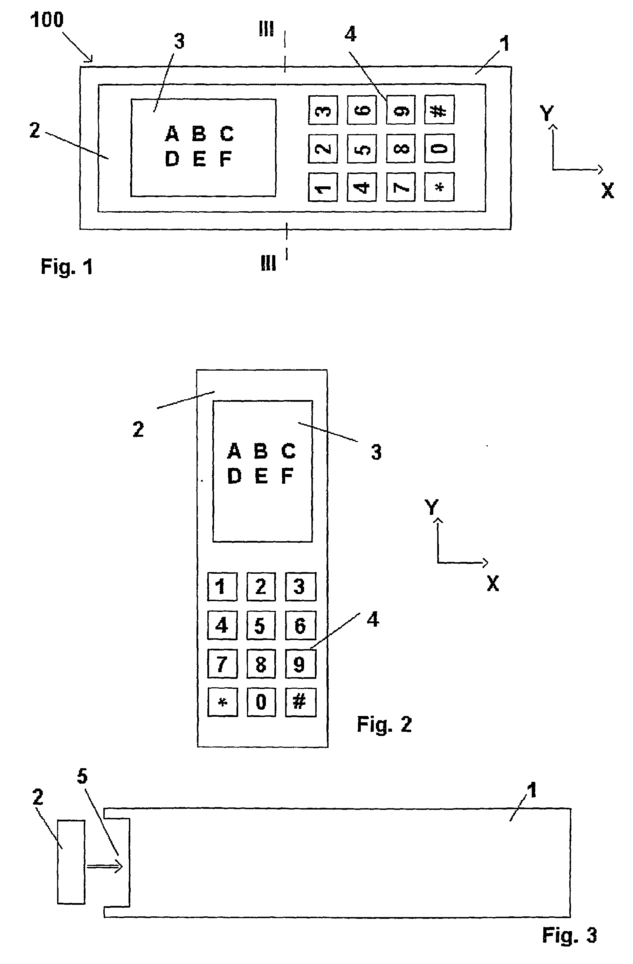

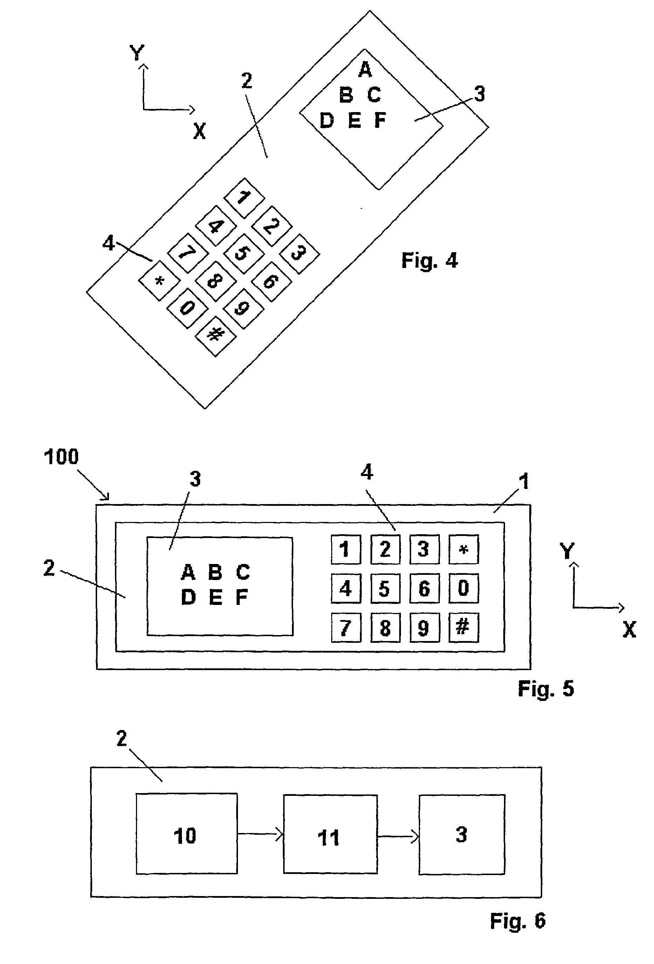

Ausführungsbeispiele der Erfindung werden in den Zeichnungen dargestellt und in der nachfolgenden Beschreibung näher erläutert. Es zeigen die Figur 1 ein Kommunikationsgerät mit Gehäuseteil und Telefon, Figur 2 ein Telefon in herausgenommenen Zustand, Figur 3 einen Querschnitt durch Figur 1, Figur 4 ein weiteres Telefon im herausgenommenen Zustand, Figur 5 ein weiteres Telefon zusammen mit einem Gehäuseteil und Figur 6 die Ansteuerung des Displays.

### Beschreibung

In der Figur 1 wird eine Vorderansicht eines Radiotelefons 100 gezeigt, welches aus einem Gehäuseteil 1 und einem in die Vorderseite des Gehäuseteils eingesetztem Telefon 2 besteht. Das Telefon 2 weist ein Display 3 und eine Tastatur 4 auf. In der Figur 3 wird ein Querschnitt durch das Gehäuseteil 1 entlang der Linie III-III gezeigt. Wie in der Figur 3 zu erkennen ist, weist das Gehäuseteil 1 auf der Vorderseite eine Ausnehmung 5 auf, die zur Aufnahme des Telefons 2 ausgebildet ist. In der Figur 3 wird eine auseinandergezogene Darstellung gezeigt, bei der durch einen Pfeil angedeutet wird, daß das Telefon 2 in die Ausnehmung 5 des Gehäuseteils 1 einsetzbar ist.

Im zusammengesetzten Zustand wird die Einheit von Telefon 2 und Gehäuseteil 1 als Radiotelefon, das heißt eine Kombination von Telefongerät und Radiogerät. Dabei ist insbesondere an die Anwendung in einem Kraftfahrzeug gedacht, bei dem das Gehäuseteil 1 in einen Standardeinbauschacht für ein Autoradiogerät eingebaut ist. In dem Gehäuseteil 1 ist dann ein Autoradio und andere übliche Geräte wie beispielsweise Kasetten-Spieler, CD-Spieler oder Navigationsgerät angeordnet. Wenn das Telefon 2 in die Ausnehmung 5 eingesetzt ist erfolgt die Bedienung des Innengehäuseteils 1 angeordneten Geräte wie Radio oder dergleichen mittels der Tastatur 4 des Telefons 2. Es können aber auch noch weitere Bedienelemente auf dem Gehäuseteil 1 vorgesehen sein, die eine Bedienung der im Gehäuseteil 1 angeordneten Geräte auch dann erlauben, wenn das Telefon 2 nicht in die Ausnehmung 5 eingesetzt ist. Weiterhin können in dem Gehäuseteil 1 andere Mittel angeordnet sein, die mit dem Telefon 2 zusammenwirken. Beispielsweise können in dem Gehäuseteil 1 eine Stromversorgung für das Telefon 2 vorgesehen sein, die ein Aufladen eines Akkumulators im Telefon 2 ermöglichen. Weiterhin können im Gehäuseteil 1 auch Verstärkereinheiten vorgesehen werden, die entweder die Antennensignale die zum Telefon geführt werden oder Signale vom Telefon nach Außerhalb verstärken. Das eine Extrem des Zusammenspiels von Gehäuseteil 1 und Telefon 2 ist dabei, daß die Geräte innerhalb des Gehäuseteils 1 ohne das eigesetzte Telefon nicht bedient werden können. Das andere Extrem besteht darin, daß die Ausnehmung 5 im wesentlichen nur eine Halterung für das Telefon 2 bietet und das Telefon 2 nicht mit irgendwelchen im Gehäuseteil 1 angeordneten Geräten zusammenarbeitet. Wesentlich ist dabei, daß das Telefon 2 sowohl arbeitet, wenn es in die Ausnehmung 5 eingesetzt ist, wie auch wenn es aus der Ausnehmung 5 herausgenommen ist.

In der Figur 2 wird das Telefon 2 in dem Zustand gezeigt, wenn es aus der Ausnehmung 5 herausgenommen ist. Auf dem Display 3 werden dabei Informationen dargestellt und durch die Tastatur 4 kann das Telefon 2 bedient werden. Das Telefon 2 ist hier als Mobiltelefon ausgebildet, das heißt es kann unabhängig vom Gehäuseteil 1 durch Funksignale Kontakt zu einem entsprechenden Mobilfunktelefonnetz aufnehmen. Alternativ ist es auch möglich, daß das Telefon 2 nur als Funktelefon begrenzter Reichweite beispielsweise nach dem DECT-Standard ausgebildet ist und auf diese Weise Kontakt zu einer im Gehäuseteil 1 angeordneten DECT-Basisstation aufgenommen wird. Innerhalb des Gehäuseteils 1 kann dann noch ein Leistungsfähiges GSM-Mobiltelefon angeordnet sein, welches dann die Signale des Telefons 2 weiterleitet.

Erfindungsgemäß ist nun vorgesehen, daß das Display 3, welches zur Darstellung von Informationen für den Benutzer dient, in Abhängigkeit davon, ob das Mobiltelefon 2 in die Ausnehmung 5 eingesetzt ist oder ob es aus der Ausnehmung 5 herausgenommen ist, die Darstellungsart der Informationen ändert. Im vorliegenden Beispiel der Figuren 1 und 2 ist vorgesehen, daß zwischen den beiden Darstellungen im eingesetzten und herausgenommenen Zustand die Darstellung der Informationen um 90° gedreht wird. Dies wird in den Figuren 1 und 2 exemplarisen durch die Buchstabenfolge A B C D E F dargestellt, wobei in der Figur 2 die Buchstaben derart auf dem Display 3 dargestellt werden, daß sie in einer Achse oder Flucht mit den Zahlen der Tastatur 4 ablesbar sind. Im eingebauten Zustand in der Figur 1 ist es jedoch so, daß die Ableseachse des Display 3 um 90° verdreht ist zur Ableseachse der Ziffern 4. Dies liegt darin begründet, daß das Gehäuse 1, bei dem insbesondere an ein Autoradio gedacht wird, welches in einem Standardeinbauschacht eines Kfz angeordnet ist, im Verhältnis zur Schwerkraft (Y-Richtung) waagerecht in X-Richtung eingebaut ist. Es wird daher vorgesehen, daß die Information auf dem Display 3 in einer Achse parallel zur Schwerkraftrichtung (Y-Achse) ablesbar sind. Es wird somit davon ausgegangen, daß sich der Benutzer in der Regel parallel zur Schwerkraft orientiert und die Informationen auf dem Display 3 werden für diese Richtung ablesbar dargestellt. Wenn das Telefon 2 aus der Ausnehmung 5 herausgenommen ist, wird davon ausgegangen, daß der Benutzer das Telefon mit der Längsachse des Telefons in y-Richtung orientiert, so daß dann die Informationen entsprechend dargestellt werden.

Für die Umschaltung können verschiedene Methoden verwendet werden. Im Telefon 2 kann beispielsweise ein Schaltkontakt vorgesehen werden, der in Abhängigkeit davon, ob das Telefon 2 in die Ausnehmung 5 eingelegt ist, betätigt wird oder nicht. Wenn zwischen dem Gehäuseteil 1 und dem Telefon 2 ein Austausch stattfindet, so kann das Vorhandensein oder Ausbleiben dieses Austausches signalisieren, ob das Telefon 2 in die Ausnehmung 5 eingelegt ist. Wenn das Gehäuseteil 1 eine Spannungsversorgung für das Telefon 2 aufweist, also kann beispielsweise das Ausbleiben des Spannungssignals ausgewertet werden, wobei dann ein herausnehmen des Telefons aus der Ausnehmung 5 am Fehlen der Spannungsversorgung erkannt wird. Weiterhin ist es möglich, daß zwischen dem Telefon 2 und dem Gehäuseteil 1 durch elektrische Kontakte oder einer Infrarotschnittstelle Daten ausgetauscht werden. Das Ausbleiben des Datenstroms vom Gehäuseteil 1 kann dann im Telefon 2 als herausnehmen des Telefons 2 aus der Ausnehmung 5 gewertet werden.

In der Figur 4 wird ein weiteres Ausführungsbeispiel der Erfindung gezeigt. In den Figuren 1 und 2 wurde von einer 90° Umschaltung ausgegangen. In der Figur 4 wird wiederum ein Telefon 2 mit einem Display 3 und einer Tastatur 4 gezeigt, welches ebenso wie in den Figuren 1 und 3 gezeigt in einer Ausnehmung 5 eines Gehäuseteils 1 einsetzbar ist. Im herausgenommenen Zustand erfolgt jedoch keine starre 90° Umschaltung sondern das Telefon 2 enthält einen Sensor, beispielsweise einen Beschleunigungssensor, der den relativen Winkel des Telefons 2 zur Schwerkraftrichtung Y bestimmt. Die Ableseachse des Displays 3 wird immer so ausgerichtet, daß sie parallel zur Schwerkraftrichtung Y ausgebildet ist. In der Figur 4 wird dies exemplarisch für eine ungefähre 45° Anordnung relativ zur Schwerkraftrichtung Y gezeigt. Wie zu erkennen ist, werden dann die Buchstaben A B C D E F G auf dem Display 3 so dargestellt wird, daß Sie in der Y-Richtung ablesbar sind. Wenn das Telefon in die Ausnehmung 5 eingelegt ist erfolgt dann wieder die Darstellung wie in der Figur 1 dargestellt.

In der Figur 1 wird davon ausgegangen, daß das Display 3 links und die Tastatur 4 rechts angeordnet werden. Die Ausnehmung 5 und das Telefon 2 können jedoch auch symmetrisch derart ausgebildet werden, daß es auch möglich ist, das Display 3 rechts und die Tastatur links anzuordnen. Der in dem Ausführungsbeispiel nach der Figur 4 vorgesehene Beschleunigungssensor, der die Orientierung des Telefons 2 relativ zur Schwerkraftachse Y mißt, kann dann dazu benutzt werden, um zu erkennen, ob das Telefon 2 mit dem Display 3 auf der linken oder auf der rechten Seite eingelegt ist. Diese Information kann dann dazu genutzt werden, die Darstellung der Informationen auf dem Display entsprechend um 180° zu drehen. Es wird so ermöglicht, daß der Benutzer das Telefon 2 beliebig orientiert in die Ausnehmung 5 einlegen kann, wobei automatisch die Informationen auf dem Display 3 so angeordnet werden, daß sie in der Schwerkraftrichtung Y ablesbar sind. Alternativ ist es auch möglich, diese von der Umschaltung der Darstellung auf dem Display 3 in Abhängigkeit davon mit welcher Orientierung das Telefon 2 in die Ausnehmung 5 eingelegt wird durch entsprechende Schaltkontakte im Telefon 2 oder Gehäuseteil 1 zu realisieren.

In der Figur 5 wird ein weiteres Ausführungsbeispiel der Erfindung gezeigt. Die dargestellte Ansicht in der Figur 5 entspricht der Figur 1 mit dem Unterschied, daß die Abschließbarkeit und Anordnung der Tastatur 4 so ausgerichtet ist, daß sie in y-Richtung ablesbar sind. Hierbei wird von einer Tastatur 4 ausgegangen, deren einzelnen Beschriftungen in Abhängigkeit davon ob das Telefon 2 in die Ausnehmung 5 eingelegt ist, oder nicht, die Darstellungsrichtung ändern. Es wird so sichergestellt, daß die Information auf dem Display 3 und die Zahlen auf der Tastatur 4 von einem Benutzer beide in einer Richtung gleich gut ablesbar sind. Im herausgenommenen Zustand wird dann sowohl das Display 3 wie auch die Beschriftung der Tastatur 4 umgeschaltet, so daß das Telefon 2 im herausgenommenen Zustand durch die Figur 2 dargestellt ist. Umschaltbare Tasten für die Tastatur 4 werden beispielsweise durch Tasten gebildet, hinter denen Leuchtmittel angeordnet sind. Im herausgenommenen Zustand werden die Tasten 4 nicht beleuchtet, wobei dann die Zahlen zu sehen sind, wie sie in der Figur 2 dargestellt werden. Im eingelegten Zustand, wenn beispielsweise das Telefon 2 mit einer Stromversorgung im Gehäuse 1 verbunden ist und somit eine im Telefon 2 vorhandene Batterie nicht belastet wird werden die Leuchtmittel hinter den Tasten der Tastatur 4 eingeschaltet. Im Durchlicht erscheinen dann die Zahlen wie sie in der Figur 5 dargestellt sind. Entsprechend wird natürlich auch das Einlesen der gedruckten Tasten der Tastatur 4 umgeschaltet.

In der Figur 6 wird noch einmal ein Telefon 2 mit einem Display 3, welches hier einfach als Funktionsblock angegeben ist dargestellt. Die Ansteuerung des Funktionsblockes 3 erfolgt durch die Funktionsblöcke 10 und 11. Bei dem Block 10 handelt es sich um eine Einheit, die die darzustellen Informationen erzeugt. Diese Informationen werden dann weiter an den Funktionsblock 11 gereicht, der eine Drehung der darzustellenden Informationen vornimmt und diese dann auf dem Display 3 darstellt. Im Falle einer einfachen 90° Drehung, wie sie beispielsweise zu den Figuren 1 und 2 beschrieben wurde, können dabei einfache Umrechnungstabellen der bereits die Daten für eine entsprechend gedrehte Darstellung von Buchstaben und Ziffern auf dem Display 3 enthalten sind verwendet werden. Im Falle einer Darstellung mit beliebigem Winkeln, wie dies zur Figur 4 beschrieben wurde, enthält der Funktionsblock 11 ein entsprechendes mathematisches Transformationsprogramm, durch das Rotationen, Verschiebungen und Dehnungen unter gleichen realisiert werden.

## Patentansprüche

1. Kommunikationsgerät mit einem Telefon (2) und einem Gehäuseteil (1), wobei das Telefon (2) in einem ersten Zustand vom Gehäuseteil (1) getrennt und in einem zweiten Zustand mit dem Gehäuseteil (1) verbunden betreibbar ist, wobei beim Betrieb des Telefons (2) Informationen auf einem Display (3) des Telefons (2) mit einer Ableseachse darstellbar sind, **dadurch gekennzeichnet, daß** die Ableseachse in Abhängigkeit vom ersten oder zweiten Zustand veränderbar ist.

2. Kommunikationsgerät nach Anspruch 1, **dadurch gekennzeichnet, daß** die Ableseachse des ersten Zustands und die Ableseachse des zweiten Zustands zueinander einen Winkel von 90° aufweisen.

3. Kommunikationsgerät nach Anspruch 1, **dadurch gekennzeichnet, daß** ein Sensor für die Schwerkraftsrichtung oder ein Einstellknopf vorgesehen sind, und daß die Ableseachse des ersten Zustandes in Abhängigkeit von einem Signal des Sensors oder des Einstellknopfs eingestellt wird.

4. Kommunikationsgerät nach einem der vorhergehenden Ansprüche, **dadurch gekennzeichnet, daß** eine beschriftete Tastatur mit einer Ableseachse vorgesehen ist, und daß die Ableseachse der Tastatur in Abhängigkeit vom ersten und zweiten Zustand veränderbar ist.

5. Kommunikationsgerät nach einem der vorhergehenden Ansprüche, **dadurch gekennzeichnet, daß** das Gehäuseteil einer Ausnehmung aufweist in dem das Telefon mit einer ersten und zweiten Richtung einlegbar ist, und daß im zweiten Zustand die Richtung der Darstellung auf der Ableseachse von der ersten und zweiten Richtung abhängig gemacht wird.

6. Kommunikationsgerät nach einem der vorhergehenden Ansprüche, **dadurch gekennzeichnet, daß** das Telefon als GMS Mobilstation ausgebildet ist.

7. Kommunikationsgerät nach einem der Ansprüche 1-5, **dadurch gekennzeichnet, daß** das Telefon als Mobilteil zur Kommunikation mit einer im Gehäuseteil (1) angeordneten Basisstation ausgebildet ist.

## Claims

1. Communication appliance having a telephone (2) and a housing part (1), wherein the telephone (2) can be operated separately from the housing part (1) in a first state and connected to the housing part (1) in a second state, wherein the operation of the telephone (2) involves information being able to be shown on the display (3) of the telephone (2) with a read-off axis, **characterized in that** the read-off axis can be altered on the basis of the first or second state.

2. Communication appliance according to Claim 1, **characterized in that** the read-off axis in the first state and the read-off axis in the second state are at an angle of 90° with respect to one another.

3. Communication appliance according to Claim 1, **characterized in that** a sensor for the direction of gravity or an adjustment knob is provided, and **in that** the read-off axis in the first state is adjusted on the basis of a signal from the sensor or from the adjustment knob.

4. Communication appliance according to one of the preceding claims, **characterized in that** a labelled keypad with a read-off axis is provided, and **in that** the read-off axis of the keypad can be altered on the basis of the first and second states.

5. Communication appliance according to one of the preceding claims, **characterized in that** the housing part has a recess into which the telephone can be placed with a first and a second direction, and **in that** in the second state the direction of the presentation on the read-off axis is made dependent on the first and second directions.

6. Communication appliance according to one of the preceding claims, **characterized in that** the telephone is in the form of a GMS mobile station.

7. Communication appliance according to one of Claims 1-5, **characterized in that** the telephone is in the form of a mobile part for communication with a base station arranged in the housing part (1).

## Revendications

1. Dispositif de communication comportant un téléphone (2) et une partie formant boîtier (1), le téléphone (2) pouvant être mis en fonctionnement dans un premier état de façon séparée de la partie formant boîtier (1) et dans un deuxième état de façon liée à la partie formant boîtier (1), des informations pouvant être affichées sur un afficheur (3) du téléphone (2) suivant un axe de lecture lors du fonctionnement du téléphone (2) **caractérisé en ce que** l'axe de lecture est modifiable en fonction du premier ou du deuxième état.

2. Dispositif de communication selon la revendication 1, **caractérisé en ce que** l'axe de lecture du premier état et l'axe de lecture du deuxième état présentent l'un par rapport à l'autre un angle de 90°.

3. Dispositif de communication selon la revendication 1, **caractérisé en ce qu'**il est prévu un capteur de direction de la force de gravité et un bouton de réglage, et **en ce que** l'axe de lecture du premier état est réglé en fonction d'un signal du capteur ou du bouton de réglage.

4. Dispositif de communication selon l'une des revendications précédentes, **caractérisé en ce qu'**il est prévu un clavier portant des inscriptions avec un axe de lecture, et **en ce que** l'axe de lecture du clavier est modifiable en fonction des premier et deuxième états.

5. Dispositif de communication selon l'une des revendications précédentes, **caractérisé en ce que** la partie formant boîtier présente une cavité dans laquelle le téléphone peut être inséré dans une première et une deuxième direction et **en ce que**, dans le deuxième état, la direction d'affichage est amenée à dépendre des première et deuxième directions.

6. Dispositif de communication selon l'une des revendications précédentes, **caractérisé en ce que** le téléphone est réalisé sous la forme d'une station mobile GSM.

7. Dispositif de communication selon l'une des revendications 1 à 5, **caractérisé en ce que** le téléphone est réalisé sous la forme d'une partie mobile destinée à communiquer avec une station de base disposée dans la partie formant boîtier (1).
